Europäisches Patentamt

European Patent Office

Office européen des brevets

(19)

(11) EP 0 671 238 B1

(12) EUROPEAN PATENT SPECIFICATION

(45) Date of publication and mention
of the grant of the patent:
03.03.1999 Bulletin 1999/09

(21) Application number: 94900998.9

(22) Date of filing: 24.11.1993

(51) Int. Cl.⁶: $B23K\ 26/00$, $B23K\ 26/06$, $B23K\ 26/08$, $G02B\ 27/28$

(86) International application number:
PCT/JP93/01717

(87) International publication number:
WO 94/12309 (09.06.1994 Gazette 1994/13)

(54) **LASER MARKING APPARATUS**

LASERMARKIERUNGSGERÄT

APPAREIL DE MARQUAGE PAR LASER

(84) Designated Contracting States:
DE

(30) Priority: 25.11.1992 JP 86578/92 U

(43) Date of publication of application:
13.09.1995 Bulletin 1995/37

(73) Proprietor:
KABUSHIKI KAISHA KOMATSU SEISAKUSHO
Minato-ku Tokyo 107 (JP)

(72) Inventors:
• YOSHIDA, Koji
Hiratsuka-shi, Kanagawa 254 (JP)
• YAMAZAKI, Taku
Hiratsuka-shi, Kanagawa 254 (JP)
• MORI, Akina
Hiratsuka-shi, Kanagawa 254 (JP)

(74) Representative:
Meissner, Peter E., Dipl.-Ing. et al
Meissner & Meissner,
Patentanwaltsbüro,
Hohenzollerndamm 89
14199 Berlin (DE)

(56) References cited:
JP-A- 4 061 141          JP-A- 4 094 881

## Description

### FIELD OF THE INVENTION

The present invention relates to a raster scanning type laser marking apparatus and, more particularly, a laser marking apparatus which branches a laser beam for scanning.

### BACKGROUND RELATED ART

A conventional raster scanning type laser marking apparatus is adapted to scan a mask with a laser beam of a high peak power and mark a shape of a part of a mask surface through which the laser beam transmits on a marking surface. However, since the laser beam is reduced to be thin, its unit irradiation area is small.

Such laser marking apparatus, which provides a high energy of a unit irradiation light, is effective for marking on a material such as, for example, a metal with a relatively high threshold. However, marking on a material such as, for example, a synthetic resin with a low marking threshold, is carried out on the same irradiation area by reducing this energy power. Therefore, the same marking time as on a material of a high marking threshold is required despite of a material of a low marking threshold, and a resultant efficiency is low.

For marking on the material with a low marking threshold, the irradiation area can be increased by maintaining the energy power at the same level. However, an optical system of the conventional laser marking apparatus includes a problem that satisfactory marking cannot be carried out because a distribution of energy density substantially differs between the central part of the irradiation area and the periphery thereof if the area of the irradiated surface is expanded.

### DISCLOSURE OF THE INVENTION

An object of the present invention is to provide a laser marking apparatus with a high marking accuracy which effectively uses a laser power and is capable of substantially doubling the irradiation area on a surface to be irradiated by the laser beam while maintaining the same intensity distribution of the laser beam at the central part and the periphery and marking on a material with a low marking threshold at a scanning speed two times or more higher than the conventional by using a high output laser marking apparatus proving a laser power enough for marking on a material with a high marking threshold.

According to a first aspect of the present invention, in a laser marking apparatus which irradiates an incident laser beam from a laser beam source by raster-scanning a surface to be marked through a raster scanning system comprising an X-direction polarizing mirror, a Y-direction polarizing mirror, a field lens, and a mask, characterised by a double polarizing prism comprising a pair of polarizing prisms for branching the incident laser beam into twin laser beams are arranged in series at an intermediate position between the laser beam source and the one, of the X-direction polarizing mirror and the Y-direction polarizing mirror located at an upstream side and adjusting means for varying a distance between this pair of polarizing prisms is provided. Preferably, this adjusting means comprises a rotary holder which is provided with a geared surface on its outer periphery and one of polarizing prisms, a slide holder which engages with this rotary holder and accommodates the other polarizing prism, and motors for driving these holders to rotate the rotary holder and move the slide holder in the direction of the incident laser beam.

According to a second aspect of the present invention, the apparatus is provided with adjusting means for a rotation angle at which the pair of polarizing prisms are simultaneously rotated. Preferably, this rotation angle adjusting means comprises a rotary holder which is provided with a pulley on its outer periphery and accommodates a pair of polarizing prisms, a bearing which holds the rotary holder to be rotatable and a motor for driving this pulley, and adjusts the rotation angle by rotating the rotary holder. In this case, the pair of polarizing prisms can be adapted so that one of these polarizing prisms is independently rotated.

According to a first configuration, a distance between twin laser beams on the mask surface can be changed. Also, according to a second configuration, one of twin laser beams is rotated around the other laser beam on the mask surface and the distance between twin laser beams can be changed accordingly. Consequently, though the diameter of the laser beam is increased when the laser power is raised, the distance between the twin laser beams can be adjusted so that beam spots do not overlap one on another during scanning. Thus the laser power can be effectively used and, even though the laser beam diameter is increased, the number of scanning lines and the scanning time can be reduced.

### BRIEF DESCRIPTION OF THE DRAWINGS

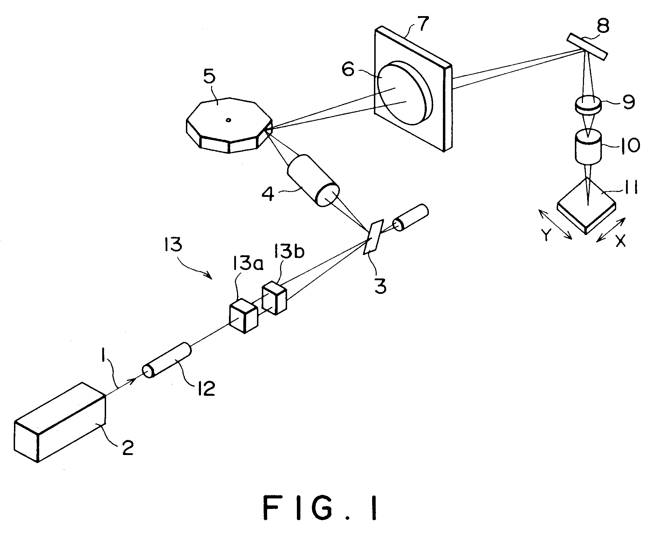

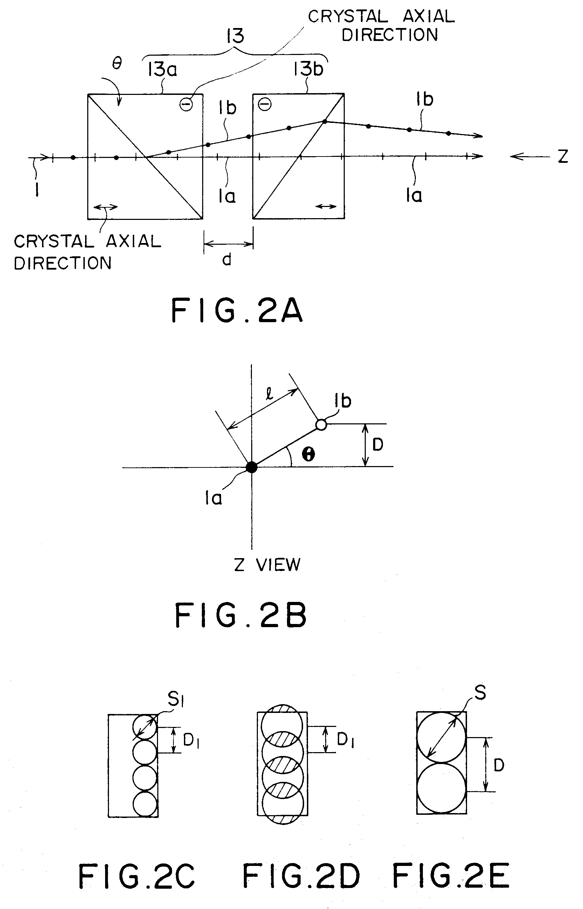

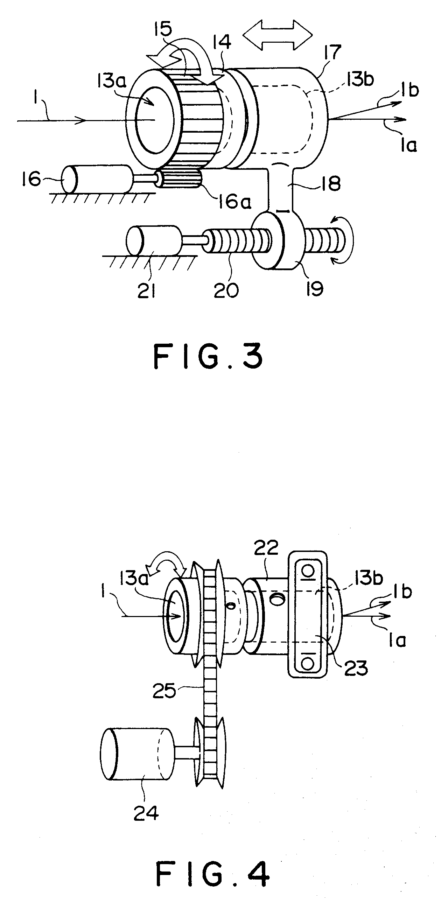

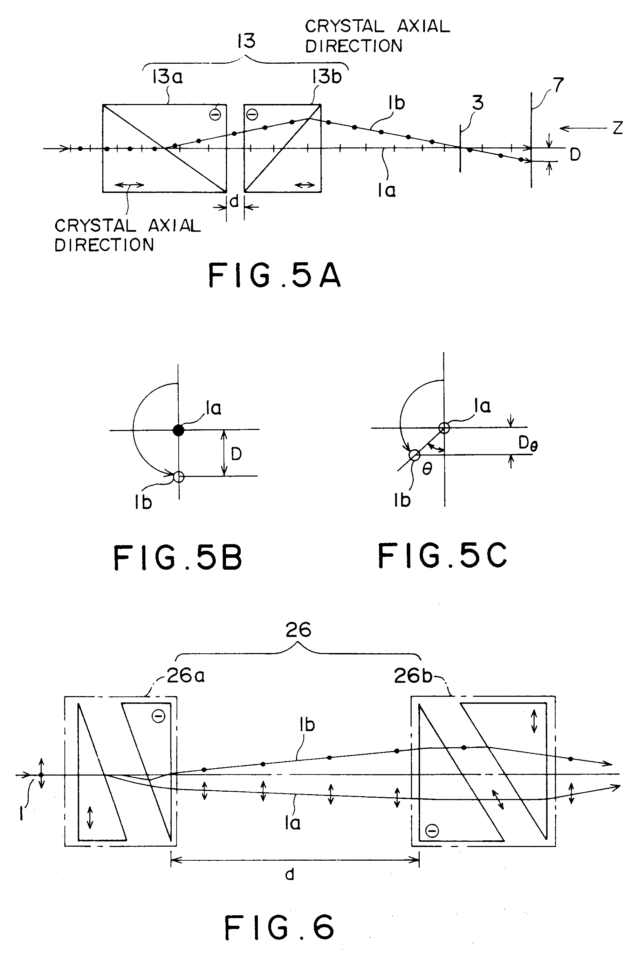

Fig. 1 is an overall configuration diagram of a laser marking apparatus according to a first embodiment of the present invention; Figs. 2A to 2E are respectively a diagram illustrating operation of a double polarizing prism which branches a laser beam into twin laser beams; Fig. 3 is a perspective view of an adjusting device according to the first embodiment of the double polarizing prism; Fig. 4 is a perspective view of an adjusting device according to a second embodiment of the double polarizing prism; Figs. 5A to 5C are respectively a diagram illustrating operation of the double polarizing prism in the adjusting device shown in Fig. 4; and Fig. 6 is a diagram illustrating operation when the Wollaston prism is used in the double polarizing prism.

## BEST MODE FOR CARRYING OUT THE INVENTION

The first embodiment of the present invention is described in detail below, referring to Figs. 1 to 3. In Fig. 1, reference numeral 1 is a laser beam from a YAG laser oscillator 2 which is a laser beam source, and this laser beam 1 is irradiated onto a marking surface 11 through an X-direction polarizing mirror 3, a relay lens 4, a polygon mirror 5, a field lens 6, a mask 7, a Y-direction polarizing mirror 8, an objective lens 9, and a relay lens 10. In this case, a liquid crystal mask, metal mask or glass mask is used as the mask 7.

In this case, the reflection light of the laser beam 1 is polarized in sequence by a specified angle in the X direction on the marking surface 11 by scanning of the X-direction polarizing mirror 3. The reflection light of the X-direction polarizing mirror 3 is irradiated onto a polygon mirror 5 through a relay lens 4 and Y-direction scanning is carried out for one line in the Y direction on the marking surface 11 in accordance with rotation of this polygon mirror 5. The reflection light of the polygon mirror 5 is condensed to a desired size through the field lens 6 and marked on the marking surface 11 according to the preset pattern of the mask 7 and the polygon mirror 5.

In this embodiment with the above configuration, a beam expander 12 and a double polarizing prism 13 are provided, in this order from the upstream side, between the X-direction polarizing mirror 3 and the YAG laser oscillator 2.

The double polarizing prism 13 is an element for separating the incident laser beam 1 into two linear polarized beams whose polarized planes intersect orthogonally each other and a Rochon type prism is used in this embodiment. In this case, the double polarizing prism 13 comprises a pair of an upstream side polarizing prism 13a and a down stream side polarizing prism 13b which are arranged in series. The Rochon prism is made up by joining the polarizing prisms whose crystal axes (Z axes) are made orthogonally intersect each other, and these upstream side polarizing prism 13a and the lower stream side 13b are arranged on the axial line of the laser beam 1. These polarizing prisms 13a and 13b are arranged with a distance d therebetween as shown in Fig. 2A, the incident laser beam 1 from the YAG laser oscillator 2 is divided into an ordinary ray laser beam 1a and an extraordinary ray laser beam 1b by the upstream side polarizing prism 13a and introduced into the down stream side polarizing prism 13b. The ordinary ray laser beam 1a stays on the same line as the incident laser beam 1 and this alignment is maintained even through the down stream side polarizing prism 13b. On the other hand, the divided extraordinary ray laser beam 1b is polarized by the upstream side polarizing prism 13a, polarized in an opposite direction by the down stream side polarizing prism 13b and introduced into the X-direction polarizing mirror 3.

The following describes adjusting means for adjusting the position of the double polarizing prism 13, referring to Fig. 3. The upstream side polarizing prism 13a is fitted to the rotary holder 14. The rotary holder 14 has a geared surface 15 on an external periphery of its one end and this geared surface 15 is engaged with a gear 16a of a geared motor 16 installed on a fixing frame. The rotary holder 14 is rotated by driving the geared motor 16 to rotate the upstream side polarizing prism. A slide holder 17 which slides and engages with the rotary holder 14 is provided and the downstream side polarizing prism 13b is accommodated in this slide holder 17. An arm 18 is provided on the external surface of this slide holder 17 and a nut part 19 is provided at the extreme end of this arm 18 and a screw shaft 20 to be inserted into the nut part 19 is thread-fitted. The screw shaft 20 is driven to rotate by a drive motor 21. The slide holder 17 is moved by this rotation along the direction of the incident laser beam 1 to adjust the distance d between the upstream side polarizing prism 13a and the downstream side polarizing prism 13b. The double polarizing prism 13 is disposed so that divided twin laser beams 1a and 1b are branched in the X direction on the marking surface 11. A Q switch is provided in the YAG laser oscillator 2 to allow oscillation of a pulse laser with a high peak power.

In the above-described configuration, the laser beam 1 which has passed through the beam expander 12 is branched into linear polarized twin laser beams 1a and 1b which orthogonally intersect each other, by the upstream side polarizing prism 13a and the downstream side polarizing prism 13b. These twin laser beams 1a and 1b are introduced into the X-direction polarizing mirror 3 whereby the laser beams 1a and 1b are polarized in a direction where the laser beams are suited to an angle of attack. Subsequently, the beam which is spreading over this angle of attack is condensed onto one point of the polygon mirror 5 through the relay lens 4. Scanning is carried out by the polygon mirror 5 and a part of the mask 7 which contains image information is raster-scanned. At this time, this image information is condensed into a required size by the field lens 6 and irradiated to be branched in the X direction on the marking surface 11 through the Y-direction polarizing mirror 8, objective lens 9 and relay lens 10.

Consequently, an angle $\Theta$ from the horizontal axial lines of the twin laser beams 1a and 1b as viewed from the Z direction can be determined according to the rotation angle $\theta$ as shown in Fig. 2B by driving the geared motor 16 to rotate the upstream side polarizing prism 13a. Since the distance 1 between the twin laser beams 1a and 1b is determined according to the distance d between the upstream side polarizing prism 13a and the downstream side polarizing prism 13b, this distance can be adjusted by rotating the screw shaft 20 by the drive motor 21 to move the slide holder 17. Such adjustments of the angle θ and the distance 1 mean the change of the distance D when the twin laser beams 1a and 1b are irradiated onto the mask 7 and therefore the marking accuracy on the marking surface 11 can be adjusted to an optimum value.

Specifically, a square area is raster-scanned in marking and Fig. 2C shows a case that four scanning lines are required when the beam diameter is $S_1$ and a distance between the beam spots is $D_1$. In this case, though the beam diameter increases to S when the laser power is raised, not only the beam spots are overlapped as shown in Fig. 2D and the laser power cannot be effectively used, but also the number of scanning lines cannot be reduced if the distance $D_1$ between the beam spots remains unchanged. On the contrary, in case of this embodiment, the distance between the beam spots is increased from $D_1$ to D to prevent overlapping of the beam spots. Consequently, the number of scanning lines can be reduced from 4 to 2 and the marking speed can be doubled.

A second embodiment of the present invention is described according to Figs. 4 to 5C. The same components as in the first embodiment are given the same reference numerals as in the first embodiment and the description is omitted.

Adjusting means for adjusting the rotation angle of the double polarizing prism 13 is described referring to Fig. 4. The upstream side polarizing prism 13a and the downstream side polarizing prism 13b are fixed in one rotary holder 22, which is held rotatable by the bearing 23. A stepping motor 24 is disposed away from the rotary holder 22 and a timing belt 25 is engaged on the pulleys which are respectively installed on the stepping motor 24 and the rotary holder 22 to rotate the rotary holder 22. Then the upstream side polarizing prism 13a and the downstream side polarizing prism 13b are simultaneously rotated with the distance d therebetween kept fixed. The distance D when the twin laser beams 1a and 1b irradiate the mask 7 is the maximum value as shown in Fig. 5A and Fig. 5B showing the Z view. When the rotary holder 22 is rotated as in this embodiment, the distance D can be changed and adjusted to a distance $D_\theta = D \cos \theta$ in accordance with the rotation angle θ as shown in Fig. 5C. Even when the upstream side polarizing prism 13a and the downstream side polarizing prism 13b are adapted to be independently rotated with the distance d therebetween kept fixed, this distance D can be adjusted similarly.

In addition, Fig. 6 shows an example in which the Wollaston prism is used as the double polarizing prism 26. The Wollaston prism is such that the incident direction of the Rochon prism is changed by 90 degrees and a similar function to the Rochon prism can be obtained. In other words, the double polarizing prism 26 comprises a pair of an upstream side polarizing prism 26a and a downstream side polarizing prism 26b, which are arranged on the axial line of the incident laser beam 1 with the distance d therebetween. Thus, the incident laser beam 1 is divided into twin laser beams 1a and 1b at the upstream side polarizing prism 26a and introduced into the downstream polarizing prism 26b. At this time, the twin laser beams 1a and 1b are polarized in an opposite direction and introduced into the X-direction polarizing mirror 3. The distance D when the twin laser beams 1a and 1b irradiate the mask 7 is adjusted as described above by rotating a rotary apparatus shown in Fig. 4 on which a pair of polarizing prisms 26a and 26b are mounted for rotational scanning.

Industrial Applicability of the Invention

The laser marking apparatus according to the present invention is capable of not only carrying out marking on a material with a low marking threshold at a more than two-fold high scanning speed by using a high output laser marking apparatus, but also effectively using the laser power and ensuring high marking accuracy.

**Claims**

1. A laser marking apparatus for irradiating an incident laser beam (1) from a laser beam source (2) onto a marking surface (11) by raster-scanning said marking surface through a raster scanning system comprising an X-direction polarizing mirror (3), a Y-direction polarizing mirror (8), a field lens (6) and a mask (7), characterised by a double polarizing prism (13) comprising a pair of polarizing prisms (13a,13b) for branching said incident laser beam into twin laser beams is arranged in series at an intermediate position between said laser beam source and the one of said X-direction polarizing mirror and said Y-direction polarizing mirror which is located at an upstream side, and adjusting means for varying a distance between said pair of polarizing prisms is provided.

2. A laser marking apparatus according to Claim 1, wherein said adjusting means comprises a rotary holder (14) which is provided with a geared surface (15) on its external periphery and one of polarizing prisms, a slide holder (17) which slides to engage with said rotary holder and accommodates the other polarizing prism, and a motor (21) for driving these components, whereby said rotary holder is rotatable to move said slide holder along a direction of said incident laser beam.

3. A laser marking apparatus for irradiating an incident laser beam (1) from a laser beam source (2) onto a marking surface (11) by raster-scanning said marking surface through a raster scanning system comprising an X-direction polarizing mirror (3), a Y-direction polarizing mirror (8), a field lens and a mask (7), characterised by a double polarizing prism (26) comprising a pair of polarizing prisms (26a,26b) for branching said incident laser beam into twin laser beams is arranged in series at an intermediate position between said laser beam source and the one of said X-direction polarizing mirror and said Y-direction polarizing mirror which is located at an upstream side, and adjusting means for adjusting a rotation angle at which said pair of polarizing prisms are simultaneously rotated is provided.

4. A laser marking apparatus according to Claim 3, wherein said rotation angle adjusting means comprises a rotary holder (22) which is provided with a pulley on its external periphery and accommodates said pair of polarizing prisms, a bearing which holds said rotary holder to be rotatable and a drive motor (24) for driving said pulley, thereby adjusting the rotation angle by rotating said rotary holder.

5. A laser marking apparatus according to Claim 3, wherein one polarizing prism of said pair of polarizing prisms is adapted to be independently rotatable.

**Patentansprüche**

1. Lasermarker-Anlage zum Bestrahlen einer für die Musterübertragung bestimmten Fläche (11) unter Abrasterung dieser Fläche mit Hilfe eines von einer Laserstrahlquelle (2) erzeugten und auf diese Fläche einfallenden Laserstrahls (1), der durch ein Rasterungssystem hindurchgelenkt wird, das einen Polarisationsspiegel (3) für die X-Richtung, einen Polarisationsspiegel (8) für die Y-Richtung, eine Feldlinse (6) und einen Maske (7) umfaßt, dadurch gekennzeichnet, daß in Richtung Laserstrahlquelle ein Doppel-Polarisationsprisma (13), bestehend aus einem Paar Polarisationsprismen (13a, 13b) zum Aufteilen des einfallenden Laserstrahls in einen Doppel-Laserstrahl, hintereinander in einer Zwischenposition zwischen der Laserstrahlquelle und dem Polarisationsspiegel für die X-Richtung bzw. dem Polarisationsspiegel für die Y-Richtung angeordnet ist und eine Einstellvorrichtung zum Verstellen eines Abstands zwischen dem Polarisationsprismenpaar vorgesehen ist.

2. Lasermarker-Anlage nach Anspruch 1, bei der zu der Einstellvorrichtung ein drehbarer Halter (14), der mit einer Verzahnung (15) an seinem äußeren Umfang versehen ist und eines der Polarisationsprismen aufnimmt, ein Gleithalter (17), der gleitend in dem drehbaren Halter sitzt und das andere Polarisationsprisma aufnimmt, und ein Motor (21) zum Verstellen dieser Teile gehören, so daß der drehbare Halter gedreht werden kann, damit der Gleithalter in Richtung des einfallenden Laserstrahls bewegt werden kann.

3. Lasermarker-Anlage zum Bestrahlen einer für die Musterübertragung bestimmten Fläche (11) unter Abrasterung dieser Fläche mit Hilfe eines von einer Laserstrahlquelle (2) erzeugten und auf diese Fläche einfallenden Laserstrahls (1), der durch ein Rasterungssystem hindurchgelenkt wird, das einen Polarisationsspiegel (3) für die X-Richtung, einen Polarisationsspiegel (8) für die Y-Richtung, eine Feldlinse (6) und einen Maske (7) umfaßt, dadurch gekennzeichnet, daß in Richtung Laserstrahlquelle ein Doppel-Polarisationsprisma (26), bestehend aus einem Paar Polarisationsprismen (26a, 26b) zum Aufteilen des einfallenden Laserstrahls in einen Doppel-Laserstrahl, hintereinander in einer Zwischenposition zwischen der Laserstrahlquelle und dem Polarisationsspiegel für die X-Richtung bzw. dem Polarisationsspiegel für die Y-Richtung angeordnet ist und eine Einstellvorrichtung zum Verstellen eines Drehwinkels vorgesehen ist, um den das Polarisationsprismenpaar simultan gedreht wird.

4. Lasermarker-Anlage nach Anspruch 3, bei der zur Drehwinkeleinstellvorrichtung ein drehbarer Halter (22), der an seinem äußeren Umfang mit einer Riemenscheibe versehen ist und ein Polarisationsprismenpaar aufnimmt, ein Lager, das den drehbaren Halter drehbar aufnimmt, und ein Motor (24) zur Betätigung der Riemenscheibe gehören, so daß der Drehwinkel durch Drehen des drehbaren Halters eingestellt wird.

5. Lasermarker-Anlage nach Anspruch 3, bei der ein Polarisationsprisma des Polarisationsprismenpaares unabhängig vom anderen drehbar ist.

**Revendications**

1. Appareil de marquage au laser pour émettre un faisceau laser incident (1) à partir d'une source à faisceau laser (2) sur une surface de marquage (11) par balayage récurrent de ladite surface de marquage par un système à balayage récurrent comprenant un miroir de polarisation (3) de direction X, un miroir de polarisation (8) de direction Y, une lentille de champ (6) et un masque (7), caractérisé par un double prisme de polarisation (13) comprenant une paire de prismes de polarisation (13a, 13b), pour dériver ledit faisceau laser incident en deux faisceaux laser, agencé en série à une position intermédiaire entre ladite source à faisceau laser et l'un dudit miroir de polarisation à direction X et dudit miroir de polarisation de direction Y qui est situé d'un côté amont, et des moyens de réglage étant prévus pour faire varier la distance entre ladite paire de prismes de polarisation.

2. Appareil de marquage au laser selon la revendication 1,

dans lequel lesdits moyens de réglage comprennent un support rotatif (14) qui est muni d'une surface dentée (15) sur sa périphérie externe et de l'un des prismes de polarisation, un support coulissant (17) qui coulisse pour s'engager avec ledit support rotatif et reçoit l'autre prisme de polarisation, et un moteur (21) pour entraîner ces composants, ledit support rotatif pouvant être tourné pour déplacer ledit support coulissant le long d'une direction dudit faisceau laser incident.

3. Appareil de marquage au laser pour émettre un faisceau laser incident (1) à partir d'une source à faisceau laser (2) sur une surface de marquage (11) par balayage récurrent de ladite surface de marquage par un système à balayage récurrent comprenant un miroir de polarisation (3) de direction X, un miroir de polarisation (8) de direction Y, une lentille de champ (6) et un masque (7),

caractérisé par un double prisme de polarisation (26) comprenant une paire de prismes de polarisation (26a,26b), pour dériver ledit faisceau laser incident en deux faisceaux laser, agencé en série à une position intermédiaire entre ladite source à faisceau laser et l'un dudit miroir de polarisation de direction X et dudit miroir de polarisation de direction Y qui est situé d'un côté amont, et des moyens de réglage étant prévus pour régler un angle de rotation auquel ladite paire de prismes de polarisation sont tournés simultanément.

4. Appareil de marquage au laser selon la revendication 3,

dans lequel lesdits moyens de réglage de l'angle de rotation comprennent un support rotatif (22) qui est muni d'une poulie sur sa périphérie externe et reçoit ladite paire de prismes de polarisation, un palier qui maintient ledit support rotatif pour pouvoir tourner et un moteur d'entraînement (24) pour entraîner ladite poulie, en réglant ainsi l'angle de rotation en faisant tourner ledit support rotatif.

5. Appareil de marquage au laser selon la revendication 3,

dans lequel un prisme de polarisation de ladite paire de prismes de polarisation est adapté pour pouvoir tourner de façon indépendante.

FIG. I

CRYSTAL AXIAL DIRECTION

13
θ
13a          13b                    1b
⊖            ⊖
1b
← Z
1a           1a
1
CRYSTAL AXIAL DIRECTION
d

# FIG.2A

ℓ
1b
θ          D
1a

Z VIEW

# FIG.2B

S₁
D₁

D₁

S
D

# FIG.2C     FIG.2D     FIG.2E

F I G . 3

F I G . 4

FIG.5A

FIG.5B

FIG.5C

FIG.6